# EUROPÄISCHE PATENTANMELDUNG

(11) **EP 4 546 598 A1**
(43) Veröffentlichungstag der Anmeldung: **30.04.2025**
(21) Anmeldenummer: 23206336.2
(22) Anmeldetag: 27.10.2023
(51) Int. Cl.: H02J 7/00, H01R 24/66, H02J 50/10

(54) **INDUKTIVES LADEGERÄT, ANORDNUNG UMFASSEND EINE STECKDOSE UND EIN SOLCHES, SOWIE VERFAHREN ZUM INDUKTIVEN LADEN EINES ENDGERÄTES**

(71) Anmelder: Albrecht Jung GmbH & Co. KG, 58579 Schalksmühle (DE)
(72) Erfinder: Voigt, Sascha, 59494 Soest (DE); Wiesing, Dietmar, 58553 Halver (DE); Jörgens, Stefan, 58579 Schalksmühle (DE)
(74) Vertreter: Fobbe, Tobias

(57) **Zusammenfassung**

Zu dem Zweck, ein induktives Ladegerät L zum Laden eines mobilen Endgerätes zu schaffen, zu schaffen, das es ermöglicht, ein echtes "wireless charging" - Erlebnis zu ermöglichen; mithin ohne Kabel auskommt, gleichzeitig besonders einfach mit einer Hand flexibel zu installieren ist und es optisch besonders kompakt und unauffällig ermöglicht, ein mobiles Endgerät parallel zu einer Wand- und/oder Möbeloberfläche zu laden, wird ein induktives Ladegerät L umfassend eine Ladespule vorgeschlagen, die hinter einer auf der Vorderseite V des induktiven Ladegerätes L angeordneten Ladeplatte LP angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, wobei der elektrische Anschluss des induktiven Ladegerätes L als ein kabelloser, an die Rückseite R des induktiven Ladegerätes L angeformter, Stecker zum Einstecken in eine, eine Zentralplatte Z aufweisende, Steckdose ausgeführt ist, wobei der Stecker mindestens zwei Steckerstifte ST zum Einführen in Steckdosensockelöffnungen SÖ umfasst, und dass die Ladeplatte LP einen Absatz A mit einer Höhe von mindestens 4 mm aufweist.

## Beschreibung

Die Erfindung betrifft ein induktives Ladegerät zum Laden eines mobilen Endgerätes umfassend eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche.

Die Erfindung betrifft zudem eine Anordnung umfassend eine, mindestens zwei Steckdosensockelöffnungen eines Steckdosensockels aufweisende, Steckdose mit einer Zentralplatte sowie ein erfindungsgemäßes induktives Ladegerät.

Ferner betrifft die Erfindung ein Verfahren zum induktiven Laden eines mobilen Endgerätes mit der erfindungsgemäßen Anordnung.

Klassische, unter dem Produktnamen beziehungsweise der Marke MagSafe ^{®} vorbekannte, induktive Ladegeräte weisen zum Laden eines mobilen Endgerätes eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes auf (*www. apple. com*/*de*/*shop*/*product*/*MHXH3ZM*/*A*/*magsafe-ladegerät?fnode=29611cce37f8e0f1f08e4d5d14d0ldeb871baad43ad21b7 df6c4ccb5d331efbb6ad88290dd94bd8df05c792cdcbff11bf7f2c472a68766 3655b127bc778ceaf27bd64b4d7c766633f3f96b12bd1f7277654d4165481 2212293cf39021 afe 1 c200400 1 0 1449bf5b465ef11 b54054c89 2cabdd7d42 40dd636453bcc17583988594).*

Problematisch bei diesen Lösungen ist, dass sie ein separates Netzteil und ein entsprechendes Ladekabel zum Verbinden des Netzteils und Ladeelektronik erfordern. Derartige Ladekabel stehen im Widerspruch zum "wireless charging", da statt des mobilen Endgerätes ein Kabel an das Ladegerät angeschlossen werden muss. Insofern ist die Handhabung durch ein erforderliches Ladekabel erschwert. Zum Anbringen des induktiven Ladegerätes, insbesondere des sogenannten MagSafe ^{®}, sind auch Wandhalterungen bekannt. Hierdurch wird jedoch das Kabel nicht entbehrlich, sondern hängt auffällig an der Wand zu einer Steckdose oder muss durch optisch auffällige Maßnahmen versteckt/verkleidet werden, so dass der ästhetische Gesamteindruck beeinträchtig wird.

Alternativ sind induktive Ladegeräte zum Laden eines mobilen Endgerätes bekannt, die in eine Installationsdose montiert werden können, beispielsweise aus EP 3 826 279 B1. Nachteilig dabei ist, dass diese eine enorme Installationshürde aufweisen, da entweder eine Installationsdose installiert werden muss oder bestehende Geräte ausgebaut und gegen das induktive Ladegerät getauscht werden müssen. Damit ist auch der Einsatzort des induktiven Ladegerätes nicht mehr flexibel.

Ausgehend von diesem diskutierten Stand der Technik liegt der Erfindung die Aufgabe zugrunde, ein induktives Ladegerät zum Laden eines mobilen Endgerätes zu schaffen, das es ermöglicht, ein echtes "wireless charging" - Erlebnis zu ermöglichen; mithin ohne Kabel auskommt, gleichzeitig besonders einfach mit einer Hand flexibel zu installieren ist und es optisch besonders kompakt und unauffällig ermöglicht, ein mobiles Endgerät parallel zu einer Wand- und/oder Möbeloberfläche zu laden.

Gelöst wird diese Aufgabe durch ein induktives Ladegerät zum Laden eines mobilen Endgerätes wobei der elektrische Anschluss des induktiven Ladegerätes als ein kabelloser, an die Rückseite des induktiven Ladegerätes angeformter, Stecker zum Einstecken in eine, eine Zentralplatte aufweisende, Steckdose ausgeführt ist, wobei der Stecker mindestens zwei Steckerstifte zum Einführen in Steckdosensockelöffnungen umfasst.

Ein solches erfindungsgemäßes induktives Ladegerät zum Laden eines mobilen Endgerätes umfasst eine Ladespule, die hinter einer auf der Vorderseite des induktiven Ladegerätes angeordneten Ladeplatte angeordnet ist, regelmäßig ein Netzteil, sowie einen Haltemagneten (regelmäßig ringförmig oder zumindest teilweise ringförmig ausgebildet) zum Halten eines mobilen Endgerätes parallel zu einer Wand- und/oder Möbeloberfläche. Zum elektrischen Anschluss an eine Energieversorgung weist das induktive Ladegerät einen kabellosen, an die Rückseite des induktiven Ladegerätes angeformten, Stecker zum Einstecken in eine, eine Zentralplatte aufweisende, Steckdose auf.

Dabei weist der Stecker mindestens zwei Steckerstifte zum Einführen in Steckdosensockelöffnungen auf. Hierdurch wird nicht nur die Energieversorgung sichergestellt, sondern auch eine gewisse Haltekraft erzeugt, so dass das induktive Ladegerät nicht versehentlich abgezogen wird, wenn das mobile Endgerät vom induktiven Ladegerät entfernt wird.

Insofern wird besonders intelligent bei dem erfindungsgemäßen induktiven Ladegerät auf einen kabellosen, an die Rückseite des induktiven Ladegerätes angeformten, Stecker zum Einstecken in eine Steckdose genutzt. Der kabellose Stecker ist dabei direkt an die Rückseite des induktiven Ladegerätes angeformt, so dass kein unerwünschtes Kabel erforderlich ist. Gleichzeitig erlaubt das erfindungsgemäße induktive Ladegerät hierdurch eine besonders flexible Nutzung an jedweder Steckdose, und zwar durch eine einzelne Hand mit einem einzigen Handrgriff: Zur Installation des induktiven Ladegerätes muss dieses mit seinem Stecker lediglich in die Steckdose eingesteckt werden. Insbesondere entfällt ein Anschluss eines Netzteils an eine Steckdose via Stecker, sowie der Anschluss eines Netzteils an eine induktive Ladestation via Ladekabel. Damit wird die Installation deutlich vereinfacht. Auch ist im Gegensatz zu vorbekannten induktiven Ladegeräten, die in eine Installationsdose montiert werden, die Installationshürde substantiell abgesenkt und die Flexibilität deutlich verbessert.

Ein erfindungsgemäßes induktives Ladegerät zum Laden eines mobilen Endgerätes weist dabei in einer besonders bevorzugten Ausgestaltung einen Stecker auf, der als Euro- oder Schukostecker ausgeführt ist. Hierdurch wird eine breite Einsetzbarkeit im Verbund mit einer Vielzahl von Steckdosen ermöglicht.

Ein großer Vorteil des erfindungsgemäßen induktiven Ladegerätes, bei dem die Steckerstifte einen isolierenden Kragen aufweisen, der mindestens 5mm, vorzugsweise mindestens 5,5mm Durchmesser aufweist, besteht darin, dass die Haltekraft der Steckerstifte an dem Steckdosensockel, insbesondere den Steckdosensockelöffnungen, wirksam erhöht wird. Damit wird ein versehentliches Abziehen des induktiven Ladegerätes beim Entfernen des mobilen Endgerätes effektiv vermieden.

Gemäß einer Weiterbildung der vorstehend beschriebenen Ausführungsform ist dabei der Kragen aus einem elastischen Material, beispielsweise Silikon, gefertigt und kontaktiert die Innenseite der Steckdosensockelöffnungen, sodass die Haltekraft noch weiter verbessert wird. Besonders bevorzugt ist dabei der Kragen aus dem elastischen Material mit Übermaß bezüglich der Steckdosensockelöffnungen gefertigt, so dass der Kragen unter Vorspannung stehend in die Steckdosensockelöffnungen einsetzbar ist.

In einer bevorzugten Ausführungsform des erfindungsgemäßen induktiven Ladegerätes weist der Stecker an seiner Rückseite einen Halteabsatz auf, der zum Einsetzen in die topfförmige, zylindrische Vertiefung einer Steckdose geeignet ist. Dabei umfasst der Halteabsatz elastische Elemente, die die topfförmige, zylindrische Vertiefung jedenfalls abschnittsweise umlaufend kontaktiert, um die Haltekraft des Halteabsatzes an der topfförmigen, zylindrischen Vertiefung der Steckdose zu erhöhen.

In einer bevorzugten Ausführungsform des erfindungsgemäßen induktiven Ladegerätes ist die Ladeplatte als Zylinder ausgeführt.

In einer bevorzugten Ausführungsform des erfindungsgemäßen induktiven Ladegerätes weist die Ladeplatte einen Absatz mit einer Höhe von mindestens 4 mm auf. Hierdurch wird vermieden, dass die regelmäßig aus dem Gehäuse eines mobilen Endgerätes hervorstehende Kamera mit der Ladeplatte kollidiert und so die Haltekraft sowie den Ladeprozess beeinträchtigt.

Gemäß einer bevorzugten Ausführungsform des erfindungsgemäßen induktiven Ladegerätes ist der Absatz der Ladeplatte bezüglich einer Zentralplatte der Steckdose (und nicht einer Platte des induktiven Ladegerätes, die parallel zu so einer Steckdose verläuft) ausgeführt. Dabei ist die Ladeplatte bevorzugt als mindestens 4 mm hoher Zylinder ausgeführt, der mit seiner zur Wand weisenden Grundfläche entweder in die topfförmige zylindrische Vertiefung eingreift oder sich direkt an der Zentralplatte abstützt. Damit wird eine besonders flache und elegante Aufbauhöhe erreicht, die die ästhetische Wahrnehmung der Steckdose nicht spürbar beeinträchtigt. Vielmehr wird durch das erfindungsgemäße Ladegerät der Eindruck eines Drehdimmers, also: eines Installationsgerätes bei dem ein zylindrischer Bedienknopf auf einer Zentralplatte mittig angeordnet ist, vermittelt.

Zudem betrifft die Erfindung eine Anordnung umfassend eine, mindestens zwei Steckdosensockelöffnungen eines Steckdosensockels aufweisende, Steckdose mit einer Zentralplatte sowie ein erfindungsgemäßes induktives Ladegerät, wobei der elektrische Anschluss des induktiven Ladegerätes als ein, an die Rückseite des induktiven Ladegerätes angeformter, kabelloser Stecker, der in die Steckdose eingesteckt ist, ausgeführt ist. Dabei umfasst der Stecker mindestens zwei Steckerstifte zum Einführen in Steckdosensockelöffnungen. Die Ladeplatte weist bevorzugt einen Absatz mit einer Höhe von mindestens 4 mm auf.

Ferner betrifft die Erfindung ein Verfahren zum induktiven Laden eines mobilen Endgerätes mit der erfindungsgemäßen Anordnung umfassend die Schritte:
- Einstecken des kabellosen Steckers des induktiven Ladegerätes in die Steckdose, so dass die Steckerstifte in die Steckdosensockelöffnungen eintauchen,
- Befestigen des zu ladenden mobilen Endgerätes an dem induktiven Ladegerät unter Ausnutzung der magnetischen Haltekraft, die zwischen dem Haltemagneten des induktiven Ladegeräts und des Akkumulators des mobilen Endgerätes wirkt,
- Starten des Ladevorgangs.

Nachfolgend ist die Erfindung unter Bezugnahme auf die beigefügten Figuren anhand diverser Ausführungsbeispiele beschrieben. Es zeigen:
- **Fig. 1:**: eine schematische perspektivische Darstellung einer Ausgestaltung einer ersten erfindungsgemäßen Anordnung,
- **Fig. 2:**: eine schematische perspektivische Darstellung einer Ausgestaltung einer zweiten erfindungsgemäßen Anordnung, und
- **Fig. 3:**: eine schematische perspektivische Darstellung einer Ausgestaltung einer dritten erfindungsgemäßen Anordnung.

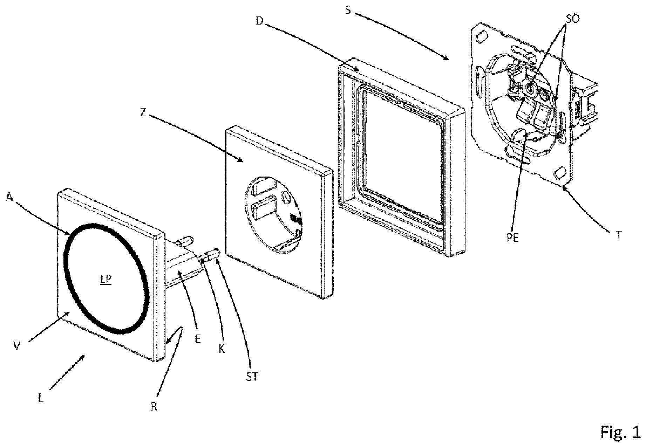

Eine in Figur 1 gezeigte erste erfindungsgemäße Anordnung umfasst eine, mindestens zwei Steckdosensockelöffnungen SÖ eines Steckdosensockels S aufweisende, Steckdose mit einer Zentralplatte Z sowie ein induktives Ladegerät L. Ferner weist der dargestellte Steckdosensockel S Erdungsbügel PE und einen Tragring T auf, beispielsweise um den Steckdosensockel S an einer Installationsdose festzulegen. Die Zentralplatte Z der Steckdose ist so ausgebildet, dass sie von einem Designrahmen D umlaufend abgedeckt wird.

Der elektrische Anschluss des induktiven Ladegerätes L ist als ein, an die Rückseite R des induktiven Ladegerätes L angeformter, kabelloser Stecker, der in die Steckdose eingesteckt ist, ausgeführt. Vorliegend ist der Stecker als Eurostecker E ausgeführt und weist zwei Steckerstifte ST zum Einführen in Steckdosensockelöffnungen SÖ auf. Die Ladeplatte LP ist auf der Vorderseite V des induktiven Ladegerätes L angeordnet und weist einen Absatz A mit einer Höhe von mindestens 4 mm, bevorzugt maximal 6 mm, auf, wobei der Absatz A vorliegend zu einer Platte des induktiven Ladegerätes L, die sich parallel zur der Zentralplatte Z erstreckt, ausgeführt ist. Es hat sich gezeigt, das sich hierdurch das induktive Ladegerät L besonders wirksam an der Zentralplatte Z abstützt, so dass die Haltekraft das induktiven Ladegerätes L an der Steckdose verbessert wird.

Durch eine solche erfindungsgemäße Anordnung wird ein echtes "wireless charging" - Erlebnis ermöglicht, das ohne Kabel auskommt. Gleichzeitig erlaubt die Ausführung des induktiven Ladegerätes L mit einem an die Rückseite R des induktiven Ladegerätes L angeformten, kabellosen Stecker, ein Einstecken in die Steckdose mit einer Hand. Zudem wird dadurch auch eine einfache Demontage ermöglicht, insbesondere, um das induktive Ladegerät L flexibel in einer anderen Steckdose zu installieren. Die vorgenannten Vorteile werden dabei erreicht, ohne dass die typische Installationsgeräteanmutung beeinträchtigt wird, da die erfindungsgemäße Anordnung durch den kabellosen Stecker und den Absatz A besonders kompakt und unauffällig ist, um ein mobiles Endgerät parallel zu einer Wand- und/oder Möbeloberfläche zu laden.

Die Steckerstifte ST des Steckers, hier: des Eurosteckers, weisen einen isolierenden Kragen K auf, der mindestens 5mm, vorzugsweise mindestens 5,5mm Durchmesser aufweist, um die Haltekraft der Steckerstifte ST an dem Steckdosensockel S, insbesondere den Steckdosensockelöffnungen SÖ, zu erhöhen. Vorzugsweise ist der Kragen K aus einem elastischen Material, beispielsweise Silikon, gefertigt und kontaktiert die Innenseite der Steckdosensockelöffnungen SÖ.

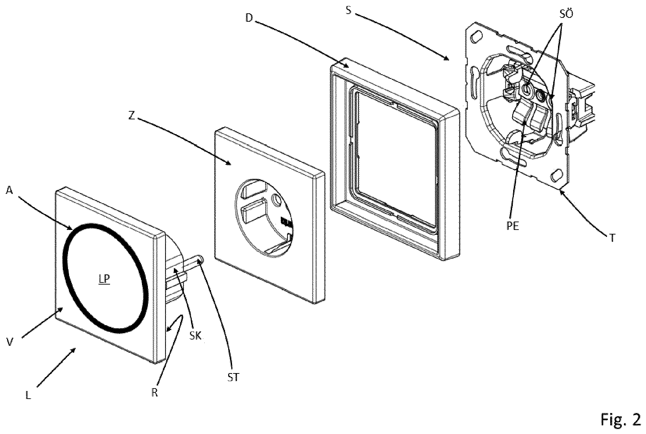

Eine in Figur 2 gezeigte zweite erfindungsgemäße Anordnung umfasst einen Schuko-Stecker SK anstelle des in Figur 1 gezeigten Eurosteckers E. Aufgrund der zylindrischen Geometrie trägt der Schuko-Stecker SK zu einem festeren Stecker-Sitz in der zylindrischen topfförmigen Vertiefung bei, so dass die Abzugskräfte eines magnetisch an dem Haltemagneten fixierten mobilen Endgerätes vergrößert sind.

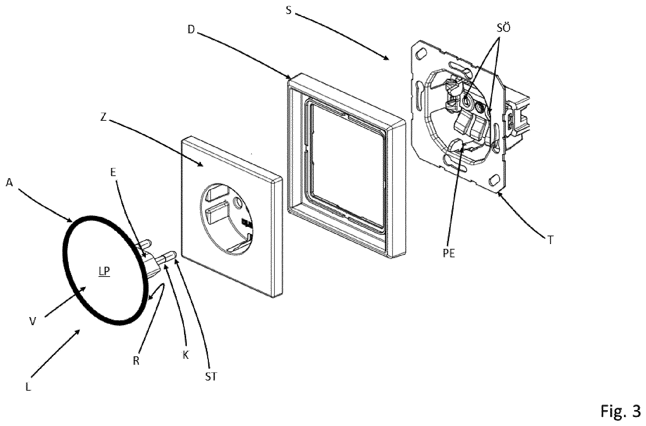

Bei der in Figur 3 gezeigten dritten, besonders kompakten und unauffälligen erfindungsgemäßen Anordnung weist das induktive Ladegerät L keine Platte auf, die sich parallel zur Zentralplatte Z der Steckdose erstreckt. Vielmehr bildet die Ladeplatte LP selbst mit einer Höhe von ca. 4mm bis 6mm selbst (direkt) einen Absatz A zu der Zentralplatte Z. Dadurch wird sowohl beim Halten des mobilen Endgerätes parallel zu einer Wand- und/oder Möbeloberfläche als auch ohne ein Halten des mobilen Endgerätes ein optischer Eindruck vermittelt, der sich von einem typischen Installationsgerät nicht unterscheidet, da das zylindrische induktive Ladegerät LP exakt wie etablierte, bekannte Drehbedienelemente von Drehdimmern aussieht, so dass der Betrachter davon ausgeht, dass ein klassisches Installationsgerät vorliegt und kein klassisches - durch Kabel und ein bauraumbeanspruchendes Aufputzangeordnetes Netzteil den optischen Gesamteindruck beeinträchtigendes - Ladegerät, das in eine Steckdose eingesteckt ist.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Absatz
- D: Designrahmen
- E: Eurostecker
- F: Funktionsmodul
- K: Kragen
- L: induktives Ladegerät
- LP: Ladeplatte
- PE: Erdungsbügel
- R: Rückseite
- S: Steckdosensockel
- SK: Schuko-Stecker
- SÖ: Steckdosensockelöffnungen
- ST: Steckerstift
- T: Tragring
- V: Vorderseite
- Z: Zentralplatte

## Patentansprüche

1. Induktives Ladegerät (L) zum Laden eines mobilen Endgerätes umfassend eine Ladespule, die hinter einer auf der Vorderseite (V) des induktiven Ladegerätes (L) angeordneten Ladeplatte (LP) angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, **dadurch gekennzeichnet, dass** der elektrische Anschluss des induktiven Ladegerätes (L) als ein kabelloser, an die Rückseite (R) des induktiven Ladegerätes (L) angeformter, Stecker zum Einstecken in eine, eine Zentralplatte (Z) aufweisende, Steckdose ausgeführt ist, wobei der Stecker mindestens zwei Steckerstifte (ST) zum Einführen in Steckdosensockelöffnungen (SÖ) umfasst.

2. Induktives Ladegerät (L) nach Anspruch 1, **dadurch**
**gekennzeichnet, dass** der Stecker als Euro-(E) oder Schukostecker (SK) ausgeführt ist.

3. Induktives Ladegerät (L) nach einem der Ansprüche 1 bis 2,
**dadurch gekennzeichnet, dass** die Steckerstifte (ST) einen isolierenden Kragen (K) aufweisen, der mindestens 5mm, vorzugsweise mindestens 5,5mm Durchmesser aufweist, um die Haltekraft der Steckerstifte (ST) an dem Steckdosensockel (S), insbesondere den Steckdosensockelöffnungen (SO), zu erhöhen.

4. Induktives Ladegerät (L) nach Anspruch 3, **dadurch**
**gekennzeichnet, dass** der Kragen (K) aus einem elastischen Material, beispielsweise Silikon, gefertigt ist und die Innenseite der Steckdosensockelöffnungen (SÖ) kontaktiert.

5. Induktives Ladegerät nach (L) Anspruch 4, **dadurch**
**gekennzeichnet, dass** der Kragen (K) aus dem elastischen Material mit Übermaß bezüglich der Steckdosensockelöffnungen (SÖ) gefertigt ist und unter Vorspannung stehend in diese einsetzbar ist.

6. Induktives Ladegerät (L) nach einem der Ansprüche 1 bis 5,
**dadurch gekennzeichnet, dass** der Stecker an seiner Rückseite (R) einen Halteabsatz aufweist, der zum Einsetzen in die topfförmige, zylindrische Vertiefung einer Steckdose geeignet ist, wobei der Halteabsatz elastische Elemente aufweist, die die topfförmige, zylindrische Vertiefung jedenfalls abschnittsweise umlaufend kontaktiert, um die Haltekraft des Halteabsatz an der topfförmigen, zylindrischen Vertiefung der Steckdose zu erhöhen.

7. Induktives Ladegerät (L) nach einem der Ansprüche 1 bis 6,
**dadurch gekennzeichnet, dass** die Ladeplatte (LP) einen Absatz (A) mit einer Höhe von mindestens 4 mm aufweist.

8. Induktives Ladegerät (L) nach Anspruch 7, **dadurch**
**gekennzeichnet, dass** der Absatz (A) bezüglich einer Zentralplatte (Z) der Steckdose ausgeführt ist.

9. Induktives Ladegerät (L) nach einem der Ansprüche 1 bis 7,
**dadurch gekennzeichnet, dass** die Ladeplatte (LP) als Zylinder ausgeführt ist.

10. Anordnung umfassend eine, mindestens zwei Steckdosensockelöffnungen (SÖ) eines Steckdosensockels (S) aufweisende, Steckdose mit einer Zentralplatte (Z) sowie ein induktives Ladegerät (L) nach einem der Ansprüche 1 bis 8, **dadurch gekennzeichnet, dass** der elektrische Anschluss des induktiven Ladegerätes (L) als ein, an die Rückseite (R) des induktiven Ladegerätes (L) angeformter, kabelloser Stecker, der in die Steckdose eingesteckt ist, ausgeführt ist, wobei der Stecker mindestens zwei Steckerstifte (ST) zum Einführen in Steckdosensockelöffnungen (SÖ) umfasst, und dass die Ladeplatte (LP) einen Absatz (A) mit einer Höhe von mindestens 4 mm aufweist.

11. Verfahren zum induktiven Laden eines mobilen Endgerätes mit der Anordnung gemäß Anspruch 9 umfassend die Schritte:
- Einstecken des kabellosen Steckers des induktiven Ladegerätes (L) in die Steckdose, so dass die Steckerstifte (ST) in die Steckdosensockelöffnungen (SÖ) eintauchen,
- Befestigen des zu ladenden mobilen Endgerätes an dem induktiven Ladegerät (L) unter Ausnutzung der magnetischen Haltekraft, die zwischen dem Haltemagneten des induktiven Ladegeräts (L) und des Akkumulators des mobilen Endgerätes wirkt,
- Starten des Ladevorgangs.
